## Europäisches Patentamt
## European Patent Office
## Office européen des brevets

(11) Veröffentlichungsnummer: **0 005 729**
**B1**

(12) **EUROPÄISCHE PATENTSCHRIFT**

(21) Anmeldenummer: **79101269.3**

(22) Anmeldetag: **27.04.79**

(51) Int. Cl.³: **F 27 B 14/14, //**
**C 03 B 5/235, C 23 C 1/14,**
**C 23 D 1/00**

(54) Vorrichtung zum Beheizen von offenen Materialschmelzebädern, wie Verzinkungs-, Emaillier-, Verbleiungs-, Metall-, Glas- oder dgl. -bäder in Wannen oder Becken.

(30) Priorität: **22.05.78 DE 2822253**

(43) Veröffentlichungstag der Anmeldung:
**12.12.79 Patentblatt 79/25**

(45) Bekanntmachung des Hinweises auf die Patenterteilung:
**04.02.81 Patentblatt 81/5**

(84) Benannte Vertragsstaaten:
**BE CH FR GB IT NL**

(56) Entgegenhaltungen:
**DE - A - 2 744 751**
**DE - B - 1 233 983**
**DE - B - 2 313 974**
**US - A - 2 820 620**
**US - A - 3 237 929**
**US - A - 3 554 444**

(73) Patentinhaber: **SAG Siegener AG**
**Birlenbacher Strasse 17**
**D-5900 Siegen/Geisweid (DE)**

(72) Erfinder: **Ackermann, Werner**
**Thurnstrasse 35**
**D-5900 Siegen-Trupbach (DE)**
(72) Erfinder: **Vollhardt, Frohmut**
**Auf der Wege 12**
**D-5900 Siegen-Bürbach (DE)**

(74) Vertreter: **Wangemann, Horst, Dipl.-Ing.**
**Stresemannstrasse 28**
**D-4000 Düsseldorf (DE)**

Vorrichtung zum Beheizen von offenen Materialschmelzebädern, wie Verzinkungs- Emaillier, Verbleiungs-, Metall-, Glas- od.dgl. -bäder in Wannen oder Becken

Die Erfindung bezieht sich auf eine Vorrichtung zum Beheizen von offenen Materialschmelzebädern, wie Verzinkungs-, Emaillier-, Verbleiungs-, Metall-, Glas- od.dgl. -bäder in Wannen oder Becken, bei der ein inertes Gas im Kreislauf durch gasseitig abgeschlossene Teile des offenen Bades in Form von Schächten und einen Erhitzer geleitet wird. Hierbei wird das Gas in die Badflüssigkeit in die an jeder Längs- und/oder Querseite der Wanne oder des Beckens angeordneten senkrechten Schächte eingeleitet, durchperlt dort die Badflüssigkeit und wird über einen Abzugskanal oberhalb der Schächte abgezogen.

Durch die DE - OS 23 13 974 ist eine Vorrichtung dieser Art bekannt. Hierbei wird das inerte Gas durch in den seitlichen. Schächten angeordnete Rohre in die Badflüssigkeit eingeleitet, um in dieser aufzusteigen und die Badflüssigkeit aufgrund der Mammutpumpenwirkung umzuwälzen.

Ein großer Teil der genannten Bäder, z.B. Verzinkungsbäder, steigert mit zunehmender Temperatur seine Aggresivität gegenüber in das Bad ragenden Metallteilen derart, daß die Lebensdauer dieser Metallteile unwirtschaftlich kurz wird. Bestehen daher die Rohre in den seitlichen Schächten aus Metall, so ist ihre Lebensdauer nur sehr kurz.- In die Badflüssigkeit mündende keramische Rohre bedürfen einer erheblichen Wandstärke, um die notwendige Festigkeit zu erzielen, da die Badflüssigkeit mit hohem spezifischem Gewicht durch das Aufperlen des inerten Gases in ständiger starker Bewegung ist. Die dicken Rohre vermindern jedoch den freien Querschnitt in den seitlichen Schächten, so daß hierdurch die in senkrechten parallelen Ebenen sich vollziehende Zirkulation aufgrund des Mammutpumpenprinzips gemindert wird. Dies bedeutet auch eine Einschränkung des Wärmetausches zwischen dem warmen inerten Gas und der Badflüssigkeit.

Der Erfindung liegt die Aufgabe zugrunde, die Vorrichtung der eingangs beschriebenen Gattung dahingehend zu verbessern, daß einerseits die Lebensdauer der das inerte Gas in die Badflüssigkeit einführenden Teile eine hohe Lebensdauer besitzen, andererseits jedoch die notwendige Festigkeit aufweisen, um der stark bewegten Badflüssigkeit innerhalb der seitlichen Schächte Rechnung zu tragen und ferner einen möglichst großen freien Querschnitt in den seitlichen Schächten belassen.

Zur Lösung dieser Aufgabe sieht die Erfindung eine Vorrichtung der eingangs beschriebenen Gattung vor, bei der mindestens eine keramische, in die Badflüssigkeit reichende Wand der senkrechten Schächte mit wenigstens einer Bohrung oder einem Schlitz versehen ist, deren bzw. dessen oberes Ende mit der Gaszuführungsleitung verbunden ist und deren bzw. dessen unteres Ende in den senkrechten Schacht mündet oder mit Mitteln versehen ist, die das Gas in den Schacht leiten.

Die Erfindung geht von dem Gedanken aus, als Zuführungsmittel für das inerte Gas in die Badflüssigkeit in den Schächten eine der aus keramischem Werkstoff bestehenden Wände des Schachtes zu benutzen, so daß der freie Querschnitt des Schachtes annähernd so erhalten bleibt, als wenn dünne metallische Rohre zum Einleiten des inerten Gases in der Schachtmittel verwendet würden, die jedoch nur eine sehr kurze Standzeit in der aggresiven Badflüssigkeit besitzen.

In weiterer Ausgestaltung der Erfindung ist eine Austrittsöffnung des inerten Gases aus der mindestens einen Wand der Senkrecten Schächte gegen die Schachtmitte zu gerichtet. .So kann die den senkrechten Schacht gegen die Wannen- oder Beckenmitte hin begrenzende keramische Schachtwand oder eine hierzu parallele Schachtwand mit einem Längsschlitz oder einer Längsbohrungsreihe versehen sein, wobei ein der Schachtmitte zugekehrte Wandquerschnittsteil weniger tief in die Badflüssigkeit eintaucht als ein der Schachtmitte abgekehrte Querschnittsteil der Wand. Auch kann das untere Ende der Bohrung oder des Schlitzes verschlossen sein und in die Schachtmitte gerichtete Durchtrittslöcher aufweisen. Auf jeden Fall ist gewährleistet, daß das in die Badflüssigkeit einzuführende inerte Gas in den Schacht gelangt, in diesem aufperlt und vermieden wird, daß das inerte Gas in die Beckenmitte gelangt, wo die zu behandelnden Gegenstände in die Badflüssigkeit eingetaucht werden. Das Einleiten des inerten Gases in den oder die seitlichen Schächte erzeugt nicht nur die Mammutpumpenwirkung in diesen Schächten und das ständige Umwälzen der Badflüssigkeit ohne ein mechanisches Hilfsmittel, sondern gewährleistet auch das Auffangen des inerten Gases oberhalb des oder der Schächte in dem Abzugskanal oder den Abzugskanälen, um im Kreislauf dem Erhitzer und neuerlich der Badflüssigkeit zugeleitet zu werden.

In weiterer Ausgestaltung der Erfindung sind der Schlitz oder die Bohrungsreihe an ihren unteren Enden mit den Gasstrom zerteilenden Mitteln versehen. Diese können in siebartigen keramischen Platten bestehen, durch deren Löcher ein Zerteilen des zunächst querschnittsgroßen Gasstromes in dem Schlitz oder den Bohrungen erfolgt, so daß der inerte Gasstrom in kleine Perlen zerteilt. in der Badflüssigkeit innerhalb des Schachtes aufsteigt und einen guten Wärmeaustausch mit der Badflüssigkeit gewährleistet.- In weiterer Ausgestaltung kann der der Innenseite des Schachtes zugekehrte Querschnittsteil der keramischen Schachtwand mit einer den Gasstrom abreißenden Rippe, Vorsprung od.dgl. versehen sein. Hierbei kann die Rippe, der Vorsprung od.dgl. am unteren Ende des Querschnittsteils der Schachtwand angeordnet sein, der der Schachtmitte zugekehrt ist, wobei der Gasstrom aus dem Schlitz oder der Bohrungsreihe um etwa 90° in die Senkrechte umgelenkt und hierbei in Einzelperlen zerteilt wird, die in der Badflüssigkeit in dem Schacht aufsteigen.

In weiterer Ausgestaltung der Erfindung weist der der Schachtmitte abgekehrte Querschnittsteil der keramischen Schachtwand einen gegen die Schachtmitte hin gerichteten Umlenkwulst oder eine Leitrippe auf. Dieser kann parallel zu der den Gasstrom zerteilenden Rippe oder dem Vorsprung angeordnet werden, wodurch erreicht wird, daß der Gasstrom unmittelbar nach dem Austritt aus der Bohrung oder dem Schlitz gegen die Querschnittsmitte des Schachtes gelenkt wird.

Auf der Zeichnung sind Ausführungsbeispiele der erfindungsgemäßen Vorrichtung und ihrer Einzelteile dargestellt und zwar zeigt

Fig. 1 eine perspektivische Ansicht eines Beckens oder einer Wanne mit seitlichen Längsschächten,

Fig. 2 einen Schnitt durch eine Ausführungsform eines solchen Schachtes,

Fig. 3 eine weitere Ausgestaltung der Schachtwand zwischen der Beckenmitte und dem Schacht und

Fig. 4 und 5 Querschnitte durch die Schachtwand zwischen der Beckenmitte und dem Schacht.

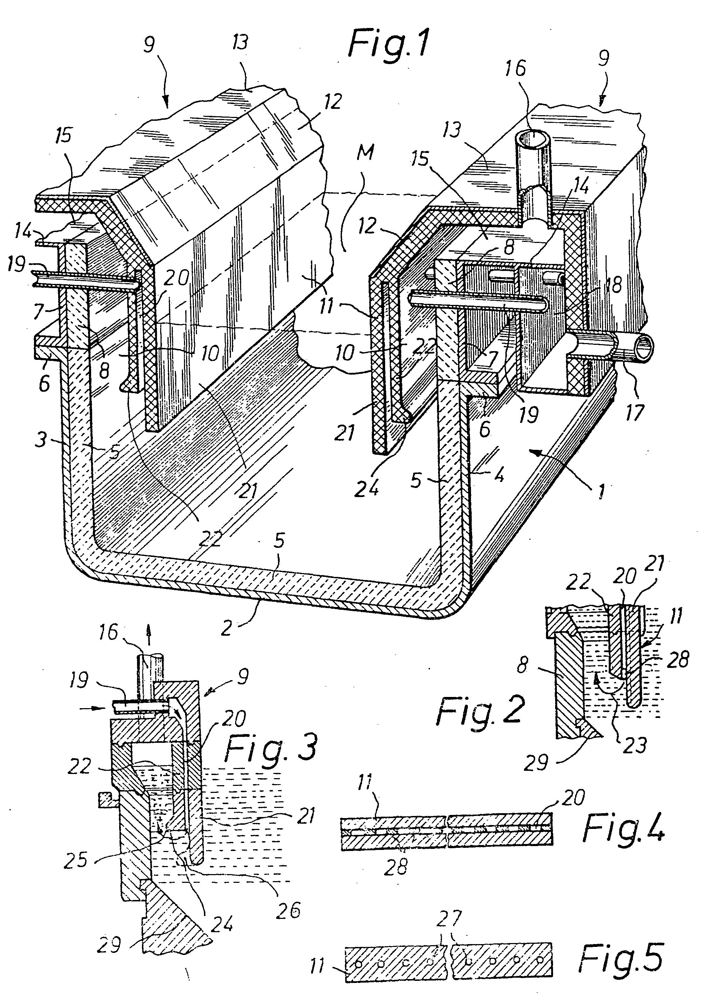

Die in Fig. 1 wiedergegebene Wanne oder das Becken 1 dient mit ihrem Inhalt der Verzinkung von bahnförmigem Metallband. Die Wanne ist hierbei aus einer Bodenwand 2 und den beiden Seitenwänden 3,4 gebildet, die mit einer Auskleidung 5 aus keramischem Werkstoff versehen sind. Auf die Flansche 6 der Wände 3,4 ist der metallische Teil 7 mit einer keramischen Auskleidung 8 eines Aufsatzes 9 aufgesetzt. Der Boden 2 sowie die Wände 3,4 und die Teile 7 bilden einen nach oben offenen Behälter, in den das zu behandelnde Gut in die von der Wanne oder dem Becken aufgenommenen Badflüssigkeit eingetaucht werden kann.

Der obere Abschnitt der Wände 3,4 mit ihren Auskleidungen 5 sowie die metallischen Teile 7 mit ihren Auskleidungen 8 bilden die äußere Wand eines senkrechten Schachtes 10 an jeder Behälterlängsseite, der zur Wannen- oder Beckenmitte M hin durch die senkrechte keramische Wand 11 des Aufsatzes 9 begrenzt wird und nach unten offen ist, wobei die senkrechte Wand 11 nach oben in eine weitere geneigte Wand 12 übergeht, deren Fortsetzung die horizontale Wand 13 des Aufsatzes 9 bilden. Diese stellt gemeinsam mit einer horizontalen Innenwand 14 die Begrenzung eines Abzugskanales 15 dar, in den eine Abzugsleitung 16 mündet, durch die das inerte Gas aus der Vorrichtung abgezogen und zu einem nicht dargestellten Erhitzer geführt wird, von dem aus das wiedererwärmte inerte Gas einer Zuführungsleitung 17 zugeführt wird. Diese mündet in eine Verteilerkammer 18, von der aus das wiedererwärmte inerte Gas über Leitungen 19 einem senkrechten Schlitz 20 in der Wand 11 des Schachtes 10 zugeführt wird, der sich annähernd über die Höhe und Länge der Wand 11 erstreckt. Durch den Schlitz 20, in den die Leitung 17 unmittelbar münden kann, wird die keramische Wand 11 des Schachtes 10 in einen der Becken- oder Wannenmitte M zugekehrten Querschnittsabschnitt 21 und einem der Becken- oder Wannenmitte abgekehrten Abschnitt 22 unterteilt. Wie Fig. 1 bis 3 erkennen lassen, ist der der Schachtmitte abgekehrte Abschnitt 21 der Wand 11 nach unten hin länger ausgebildet als der der Schachtmitte zugekehrte Wandquerschnittsteil 22. Hierdurch wird der Gasstrom aus dem Schlitz 20, der diesem unter Überdruck zugeführt wird, in Richtung des Pfeiles 23 (Fig. 2) in die Mitte des Schachtes 10 geleitet, wo der Gasstrom nach oben steigt und in den Abzugskanal 15 und die Leitungen 16 gelangt, um über den Erhitzer im Kreislauf wiederum den Leitungen 17,19 und dem Schlitz 20 zugeführt zu werden. In dem Schacht 10 wird durch den in Richtung des Pfeiles 23 aufsteigenden Gasstrom eine Mammupumpenwirkung und eine in senkrechten Ebenen umlaufende Strömung der Badflüssigkeit erzeugt.

Diese sowie der Wärmeaustausch zwischen dem Gasstrom und der Badflüssigkeit in den Schächten 10 wird dadurch wesentlich erhöht, daß der Gasstrom in Perlen zerteilt wird. Hierzu besitzt, wie Fig. 1 und 3 erkennen lassen, der der Schachtmitte zugekehrte Querschnittsteil 22 an seinem unteren Ende einen gegen das Schachtinnere gerichtete Rippe oder Verstärkung 24, durch die der Gasstrom an der freien Kante 25 der Rippe oder der Verstärkung 24 abreißt und in einzelne kleine Perlen zerteilt wird, um eine erhöhte Zirkulation der Flüssigkeit in dem Schacht 10 und einen vermehrten Wärmeaustausch zwischen dem inerten Gas und der Badflüssigkeit in dem Schacht 10 zu erreichen.

Durch den Schlitz 20 wird der Innenraum des Schachtes 10 für das Zirkulieren der Flüssigkeit in dem Schacht freigelassen.

Um das Zuleiten des Gasstromes in die Schachtmitte zu fördern, kann der der Schachtmitte abgekehrte Wandquerschnittsteil 21 an seinem unteren Ende eine gegen die Schachtmitte gerichtete Rippe 26 tragen.

Um die Stabilität der Wand 11 gegenüber dem in den Schächten 10 zirkulierenden, brodelnden und sprudelnden Badflüssigkeit zu erhöhen, kann statt des Schlitzes 20 eine Bohrungsreihe 27 vorgesehen werden (Fig. 5), wobei die Lochreihe an ihrem unteren Ende die gleiche Ausbildung der Wandquerschnittsteile 21,22 vorfindet, wie sie an Hand der Fig. 1 bis 3 bei Anwendung des Schlitzes 22 beschrieben ist. Statt der Lochreihe 27 kann der Schlitz auch durch Rippen 28 unterteilt sein, die entweder als Einzelteile mit den Querschnittsteilen 21,22 verbunden sind oder aber einteilig mit einem der Querschnittsteile 21 oder 22 ausgebildet sind.

Abweichend von der obigen Anordnung des Schlitzes 20 oder der Lochreihe 27 in der Wand 11 oder aber zusätzlich hierzu kann ein Schlitz oder eine Lochreihe in den keramischen Auskleidungen 5,8 der Seitenwände 3 bzw. der metallischen Teile 7 vorgesehen werden. Hierbei ist dann die Zuleitung 17 bzw. die Leitung 19 auch mit diesem Schlitz oder der Lochreihe verbunden, während der Abzugskanal 15 in gleicher oder ähnlicher Weise, wie in Fig. 1 dargestellt, ausgebildet ist.

## Patentansprüche

1. Vorrichtung zum Beheizen von offenen Materialschmelzebädern, wie Verzinkungs-, Emaillier-, Verbleiungs-, Metall-, Glas od.dgl. -bäder in Wannen oder Becken (1), bei der ein inertes Gas im Kreislauf durch gasseitig abgeschlossene Teile des offenen Bades in Form von Schächten (10) und einen Erhitzer geleitet wird, wobei das Gas in die Badflüssigkeit in die an jeder Längs- und/oder Querseite der Wanne oder des Beckens (1) angeordneten senkrechten Schächte (10) eingeleitet wird, dort die Badflüssigkeit durchperlt und über einen Abzugskanal (15) oberhalb der Schächte abgezogen wird, dadurch gekennzeichnet, daß mindestens eine keramische, in die Badflüssigkeit reichende Wand (11) der senkrechten Schächte (10) mit wenigstens einer Bohrung oder einem Schlitz (20) versehen ist, deren bzw. dessen oberes Ende mit einer Gaszuführungsleitung (17) verbunden ist und deren bzw. dessen unteres Ende in den senkrechten Schacht (10) mündet oder mit Mitteln (27,28) versehen ist, die das Gas in den Schacht (10) leiten.

2. Vorrichtung nach Anspruch 1, dadurch gekennzeichnet, dass eine Austrittsöffnung (27) des inerten Gases aus der mindestens einen Wand (11) der senkrechten Schächte (10) gegen die Schachtmitte gerichtet ist.

3. Vorrichtung nach Anspruch 1, dadurch gekennzeichnet, dass ein der Mitte des Schachtes (10) zugekehrte Querschnittsteil (22) der mindestens einen Schachtwand (11) weniger tief in das Becken (1) ragt als eine der Schachtmitte abgekehrte Querschnittsteil (21) der Wand (11).

4. Vorrichtung nach Anspruch 2, dadurch gekennzeichnet, dass die den senkrechten Schacht (11) gegen die Wannen- oder Beckenmitte (M) hin begrenzende keramische Schachtwand (11) oder eine hierzu parallele Schachtwand (5,8) mit einem Längsschlitz (20) oder einer Bohrungsreihe (27) versehen ist und ein der Schachtmitte zugekehrte Wandquerschnittsteil (22) weniger tief in die Badflüssigkeit eintaucht als ein der Schachtmitte abgekehrte Querschnittsteil (21) der Wand (11).

5. Vorrichtung nach Anspruch 4, dadurch gekennzeichnet, dass der Schlitz (20) oder die Bohrungsreihe (27) an ihrem unteren Ende mit einen Gasstrom zerteilenden Mitteln versehen sind.

6. Vorrichtung nach Anspruch 5, dadurch gekennzeichnet, dass der der Innenseite des Schachtes zugekehrte Querschnittsteil (22) der keramischen Schachtwand (11) mit einer den Gasstrom abreißenden Rippe (24), einem Vorsprung od.dgl. versehen ist.

7. Vorrichtung nach Anspruch 6, dadurch gekennzeichnet, dass die Rippe (24), der Vorsprung od.dgl. am unteren Ende des Querschnittsteils (22) der Schachtwand (11) angeordnet ist.

8. Vorrichtung nach Anspruch 7, dadurch gekennzeichnet, dass der der Schachtmitte abgekehrte Querschnittsteil (21) der keramischen Schachtwand (11) einen gegen die Schachtmitte hin gerichteten Umlenkwulst (26), eine Leitrippe od.dgl. aufweist.

## Claims

1. An apparatus for heating open baths of melted material such as galvanizing, enamelling, lead coating, metal, glass or the like baths in vats or basins (1) in the case of which an inert gas is circulated through parts, shut off on the gas side, of the open bath in the form of shafts (10) and through a heater, in the case of which the gas is run into the bath liquid into upright shafts (10) placed at each long and/or cross-running side of the vat or the basin (1), it then bubbling through the bath liquid and is taken off by way of a take-off duct (15) over the shafts, characterized in that at least one ceramic wall (11) (stretching into the bath liquid) of the upright shafts (10) has at least one hole or at least one slot (20), whose top end is joined with a gas inlet duct (17) and whose lower end is designed opening into an upright shaft (10) or has parts (27,28) for guiding the gas into the shaft (10).

2. An apparatus as claimed in claim 1, characterized in that an outlet opening (27) for the inert gas from at least one wall (11) of the upright shafts (10) is directed towards the middle of the shaft.

3. An apparatus as claimed in claim 1, characterized in that a cross-section part (22), facing the middle of the shaft (10) of the at least one inner shaft wall (11), is placed stretching to a lesser depth in the basin (1), than a cross-section part (21), facing away from the middle of the shaft, of the wall (11).

4. An apparatus as claimed in claim 2, characterized in that the ceramic shaft wall (11), shutting off the upright shaft (10) from the vat or basin middle (M), or a shaft wall (5, 8), parallel to the shaft wall (11), has a lengthwise slot (20) or a line of holes (27) and a wall cross-section part (22), facing the middle of the shaft, is designed running to a lower depth into the bath liquid than a cross-section part (21), turned away from the middle of the shaft, of wall (11).

5. An apparatus as claimed in claim 4, characterized in that the slot (20) or the line of holes (27) has, at its lower end, parts for causing division-up of the gas current.

6. An apparatus as claimed in claim 5, characterized in that the cross-section part (22), turned towards the inner side of the shaft, of the ceramic shaft wall (11), has a rib (24), a sticking out part or the like, for causing detachment of the gas current.

7. An apparatus as claimed in claim 6, characterized in that the rib (24), sticking out part or the like is positioned at the lower end of the cross-section part (22) of the shaft wall (11).

8. An apparatus as claimed in claim 7, characterized in that the cross-section part (21), facing away from the middle of the shaft, of the ceramic shaft wall (11) has a guiding bead (26), a guiding rib, or the like, turned towards the middle of the shaft.

## Revendications

1. Dispositif pour chauffer des bains ouverts contenant un matériau fondu, tels que des bains de galvanisation, d'émaillage, de plombage, de métal, de verre ou analogues dans des cuves ou creusets (1), dans lequel un gaz inerte est mis en circulation à travers des parties isolées côté gaz en forme de cheminées (10) et à travers un appareil de chauffage, le gaz étant introduit dans le liquide de bain par les cheminées verticales disposées sur chaque face longitudinale et/ou transversale de la cuve ou du creuset (1), où il barbote dans le liquide de bain, et étant repris par un canal d'écoulement (15) au-dessus des cheminées, caractérisé en ce que au moins une paroi céramique (11), s'étendant dans le liquide de bain, des cheminées verticales (10) est pourvue pour le moins d'une perforation ou d'une fente (20), dont l'extrémité supérieure est reliée à une conduite d'amenée de gaz (17) et dont l'extrémité inférieure débouche dans la cheminée verticale (10) ou est pourvue de moyens (27, 28), qui dirigent le gaz dans la cheminée (10).

2. Dispositif suivant la revendication 1, caractérisé en ce qu'une ouverture de sortie (27) du gaz inerte hors d'au moins une paroi (11) de cheminées verticales (10) est dirigée vers le milieu de cheminée.

3. Dispositif suivant la revendication 1, caractérisé en ce que un élément de section (22) d'au moins une paroi interne de *cheminée* (11) tournée vers le milieu de cheminée (10) fait saillie moins profondément dans le creuset qu'un élément de section (21) de la paroi (11) écarté du milieu de cheminée.

4. Dispositif suivant la revendication 2, caractérisé en ce que la paroi céramique de cheminée (11) délimitant la cheminée verticale (10) vers le milieu (M) de la cuve ou du creuset ou une paroi de cheminée (5,8) parallèle à celle-ci est pourvue d'une fente longitudinale (20) ou d'une rangée de perforations (27), et en ce qu'un élément de section de paroi (22) tourné vers le milieu de cheminée plonge moins profondément dans le liquide de bain qu'un élément de section (21) de la paroi (11) écarté du milieu de cheminée.

5. Dispositif suivant la revendication 4, caractérisé en ce que la fente (20) ou la rangée de perforations (27) est pourvue à son extrémité inférieure d'un moyen fractionnant le courant de gaz.

6. Dispositif suivant la revendication 5, caractérisé en ce que l'élément de section (22) de la paroi céramique de cheminée (11) tourné vers la face interne de la cheminée est pourvu d'une nervure (24), un rebord ou analogue expulsant le courant de gaz.

7. Dispositif suivant la revendication 6, caractérisé en ce que la nervure (24), le rebord ou analogue est disposé à l'extrémité inférieure de l'élément de section (22) de la paroi de cheminée (11).

8. Dispositif suivant la revendication 7, caractérisé en ce que l'élément de section (21), écarté du milieu de cheminée, de la paroi céramique de cheminée (11) présente un bourrelet déflecteur (26), une nervure de guidage ou analogue dirigé vers le milieu de cheminée.

Fig.1

Fig.2

Fig.3

Fig.4

Fig.5